# EUROPEAN PATENT APPLICATION

(11) **EP 1 833 205 A1**
(43) Date of publication of application: **12.09.2007**
(21) Application number: 06015689.0
(22) Date of filing: 27.07.2006
(51) Int. Cl.: H04L 12/56

(54) **Band control program, band control device and band control method**

(30) Priority: 06.03.2006 JP 2006059423
(71) Applicant: Fujitsu Ltd., Kawasaki-shi, Kanagawa 211-8588 (JP)
(72) Inventor: Okano, Tetsuya, Kawasaki-shi Kanagawa 211-8588 (JP)
(74) Representative: HOFFMANN EITLE

(57) **Abstract**

There are provided a band control program, band control device, and band control method by which traffic is identified by use of flexibly defined conditions. The band control program makes a computer of a band control device execute band control of traffic between networks. The program comprises: a packet information obtaining step that obtains packet information as information concerning a packet which has arrived at the band control device; and a band control determination step that makes determination as to the packet information obtained by the packet information obtaining step, based on a determination condition preset to make determination as to the packet information and a determination expression preset to execute calculation by use of the determination condition and performs a band control content preset according to the determination expression which the packet information satisfies, with respect to traffic to which the packet information belongs.

## Description

### BACKGROUND OF THE INVENTION

### 1. Field of the Invention

The present invention relates to a band control program, band control device, and band control method to perform band control of communication between networks.

### 2. Description of the Related Art

Band control is a technique of performing priority control of communication, to prioritize particular communication traffic to pass or to limit passage of particular communication traffic, if difference exists between two connected networks. According to conventional band control, flowing communication traffic is divided into units each called class at the link connecting the networks to control usable bands. Each class has an identification condition and a band condition. The identification condition is specified by an IP (Internet Protocol) address, a port, and where appropriate, a URL (Uniform Resource Locator). A conventional band control device performs band control in accordance with the band condition only if traffic satisfies the identification condition.

Known as prior art relevant to the present invention are, for example, a communication band control method and a communication band control device by which communication bands are assigned to terminal devices on the basis of a user name and communication band information determined by an authentication server (for example, see Patent Document 1: Jpn. Pat. Appln. Laid-Open Publication No. 2002-237838).

However, band control using conventional classes involves the following problems.

Firstly, the conventional band control device needs definition of a class for every traffic flow. However, related traffic flows cannot be defined together by one class. The conventional band control device identifies traffic flows by IP address and ports of sending sources and destinations, according to definition of targets of band control. Therefore, if the conventional band control device performs band control of a task consisting of plural traffic flows, plural classes have to be defined and managed individually. As a result, however, the management is so complicated that artificial mistakes may be induced, such as setting errors.

For example, suppose a task A which performs HTTP access to a server A, DB access to another server B, and HTTP access to further another server C. At this time, a manager has to define three classes respectively for the communication partners, by the conventional band control device.

Secondly, the conventional band control device cannot define dependencies between traffic flows, and therefore, causes wasteful band setting in some cases. That is, an empty band is created when band control is performed on a task consisting of plural traffic flows which access different servers by branching internal processing. For example, suppose that conventional band control is performed on the task A as follows.

In a pattern A of the task A, HTTP access to the server A and DB access to the server B are carried out.

In another pattern B of the task A, HTTP access to the server A and DB access to the server C are carried out.

At this time, classes are defined respectively for the patterns. Since all the classes are targets to be treated under always-on band control, bands for all the patterns are ensured. As a result, even when access concentrates on the pattern A of the task A, there exists a reservation for a band of the server C.

Thirdly, when a particular traffic flow is used overlapped, the conventional band control device cannot subdivide the class to adapt subdivided classes to usages. That is, if a particular traffic flow is used shared between plural tasks, the conventional band control device cannot perform band control distinguishing the plural tasks from one another. For example, suppose that the conventional band control is performed on the following tasks A, B, C, and D.

By the task A, HTTP access to the server A and DB access to the server B are carried out.

By the task B, HTTP access to the server A and DB access to the server C are carried out.

By the task C, HTTP access to the server A is carried out.

By the task D, the HTTP access to the server A and DB access to the server B are carried out.

At this time, HTTP access to the server A is used shared by plural tasks. However, the conventional band control device cannot define only one HTTP access class to the server A and perform band control of this class in accordance with the tasks.

### SUMMARY OF THE INVENTION

The present invention has been made to solve the problems described above, and has an object of providing a band control program, band control device, and band control method, which identify traffic flows by using definition having flexible conditions.

According to the present invention, to achieve the above object, there is provided a band control program which makes a computer of a band control device execute band control of traffic between networks, the program comprising: a packet information obtaining step that obtains packet information as information concerning a packet which has arrived at the band control device; and a band control determination step that makes determination as to the packet information obtained by the packet information obtaining step, based on a determination condition preset to make determination as to the packet information and a determination expression preset to execute calculation by use of the determination condition and performs a band control content preset according to the determination expression which the packet information satisfies, with respect to traffic to which the packet information belongs..

In the band control program, the determination expression is to perform logical calculation by use of the determination condition or another determination expression.

In the band control program, the band control determination step manages information concerning a traffic flow, and switches band control contents in correspondence with determination expressions if a determination expression which the packet information related to the traffic flow satisfies is switched to another determination expression.

In the band control program, the determination condition includes timing to make determination.

In the band control program, the packet information and the determination condition each include a sending source address, a sending destination port, a sending destination address, and a sending source port.

In the band control program, the packet information includes time, and the determination condition includes time or a time range.

In the band control program, the packet information and the determination condition each include a communication content.

In the band control program, the determination condition includes session status.

Also according to the present invention, there is provided a band control device which executes band control of traffic between networks, comprising: a packet information obtaining section that obtains packet information as information concerning a packet which has arrived at the band control device; and a band control determination section that makes determination as to the packet information obtained by the packet information obtaining section, based on a determination condition preset to make determination as to the packet information and a determination expression preset to execute calculation by use of the determination condition and performs a band control content preset according to the determination expression which the packet information satisfies, with respect to traffic to which the packet information belongs.

In the band control device, the determination expression is to perform logical calculation by use of the determination condition or another determination expression.

In the band control device, the band control determination section manages information concerning a traffic flow, and switches band control contents in correspondence with determination expressions if a determination expression which the packet information related to the traffic flow satisfies is switched to another determination expression.

In the band control device, the determination condition includes timing to make determination.

In the band control device, the packet information and the determination condition each include a sending source address, a sending source port, a sending destination address, and a sending destination port.

In the band control device, the packet information includes time, and the determination condition includes time or a time range.

In the band control device, the packet information and the determination condition each include a communication content.

In the band control device, the determination condition includes session status.

Further, according to the present invention, there is provided a band control method for executing band control of traffic between networks, comprising: a packet information obtaining step that obtains packet information as information concerning a packet which has arrived at the band control device; and a band control determination step that makes determination as to the packet information obtained by the packet information obtaining step, based on a determination condition preset to make determination as to the packet information and a determination expression preset to execute calculation by use of the determination condition and performs a band control content preset according to the determination expression which the packet information satisfies, with respect to traffic to which the packet information belongs..

According to the present invention, conditions to identify traffic are defined so flexibly that appropriate band control can be performed.

### BRIEF DESCRIPTION OF THE DRAWINGS

FIG. 1 is a block diagram showing an example of configuration of a band control device according to the embodiment of the present invention;
FIG. 2 is a table showing an example of configuration of band control setting information according to the embodiment;
FIG. 3 is a table showing an example of configuration of traffic identification information according to the embodiment;
FIG. 4 is a table showing an example of configuration of an identification table according to the embodiment;
FIG. 5 is a table showing an example of configuration of an identification expression object according to the embodiment;
FIG. 6 is a table showing an example of configuration of an identification condition table according to the embodiment;
FIG. 7 is a table showing an example of configuration of an identification condition object according to the embodiment;
FIG. 8 is a table showing an example of configuration of a session table according to the embodiment; and
FIG. 9 is a flowchart showing an example of operation of a band control determination section 21 according to the embodiment.

### DETAILED DESCRIPTION OF THE PREFERRED EMBODIMENTS

Hereinafter, an embodiment of the present invention will now be described with reference to the drawings.

Configuration of a band control device according to the embodiment will be described first.

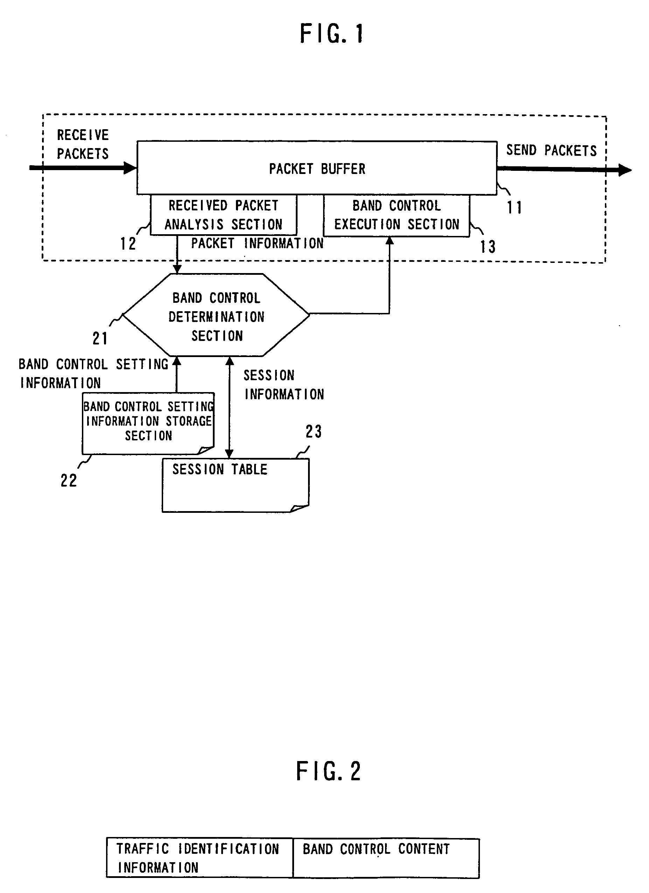

FIG. 1 is a block diagram showing an example of configuration of a band control device according to the present embodiment. This band control device has a packet buffer 11, a received packet analysis section 12, a band control execution section 13, a band control determination section 21, a band control setting information storage section 22, and a session table 23.

The packet buffer 11 is a buffer to hold temporarily a packet which has arranged at the band control device, and also performs buffering for band control. The received packet analysis section 12 analyzes the packet having arrived at the packet buffer 11, and obtains packet information as information contained in the packet. The received packet analysis section 12 further sends the packet information to the band control determination section 21. The packet information contains, for example, a sending source address, a sending source port, a destination address, a destination port, a receipt time, and a protocol type.

The band control setting information storage section 22 stores band control setting information. FIG. 2 is a table showing an example of configuration of band control setting information according to the present embodiment. This band control setting information is constituted by traffic identification information for identifying a traffic flow, from the packet information, and by a band control content to perform band control of traffic flows.

The band control content describes the contents of band control performed on an identified traffic flow by the band control execution section 13, and indicates, for example, setting about pass allowed/inhibited, priority, assigned bandwidth, or the like.

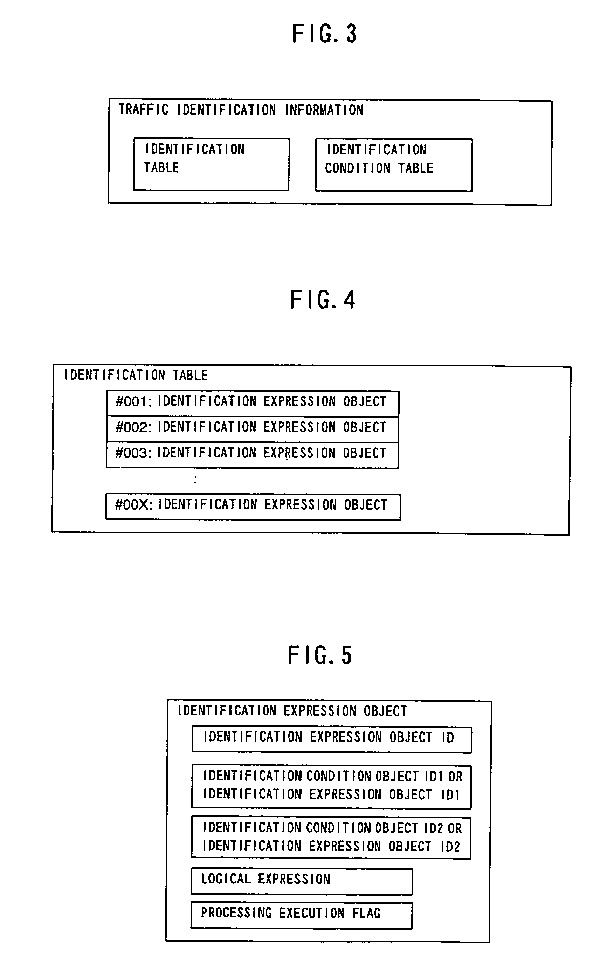

FIG. 3 is a table showing an example of configuration of traffic identification information according to the present embodiment. The traffic identification information is constituted by an identification table and an identification condition table.

FIG. 4 is a table showing an example of configuration of an identification table according to the present embodiment. The identification table stores one or plural identification expression objects arranged orderly (corresponding to classes). The maximum number of identification expression objects depends on performance capability of the band control device. Further, a band control content is defined for every identification expression object.

FIG. 5 is a table showing an example of configuration of an identification expression object according to the present embodiment. The identification expression object is constituted by an identification expression object ID, plural identification condition object IDs stored in an identification condition table or identification expression object IDs, a logic expression using the result, and a processing execution flag indicating whether processing has been executed by the identification expression object or not.

Hence, an access pattern can be expressed by defining an identification expression object which links plural identification condition objects or identification expression objects by a logical expression. The arrival packet itself can be assigned by specifying -1 as the identification condition object ID. A content of an identification condition as will be described later can be specified in place of an identification condition object ID. As the logical expression, OR, NOT, AND, XOR, and TRUE can be used. TRUE outputs the result of the identification condition object without changes. If TRUE is set as the logical expression, only one identification condition object ID is specified, the other identification condition object IDs are set to NULL.

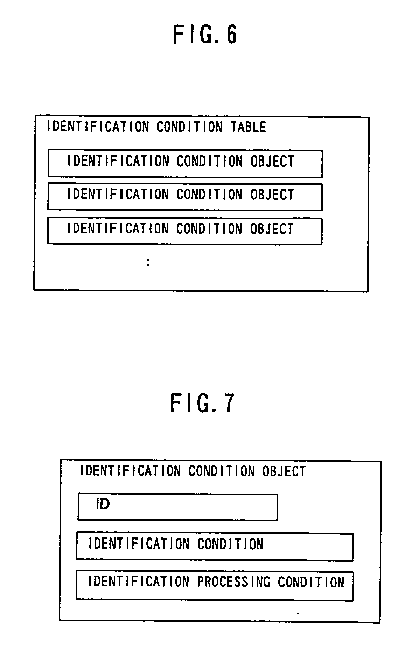

FIG. 6 is a table showing an example of configuration of an identification condition table according to the present embodiment. The identification condition table contains one or plural identification condition objects (corresponding to classes).

FIG. 7 is a table showing an example of configuration of the identification condition object according to the present embodiment. The identification condition object is constituted by an identification condition ID, an identification condition, and an identification processing condition.

The identification condition is a parameter or constant used for identification, and can use any of the following items.
- Receiving IP address or range thereof
- Receiving port or range thereof
- Sending IP address or range thereof
- Sending port or range thereof
- Protocol (plural protocols can be defined)
- Time:
   Time contents (current time, session occurrence time, time length)
   Time structure (single time, or a time range expressed by two time points (start time and end time)
   Time type (absolute time (UTC: Coordinated Universal Time), or an identification condition object ID expressing relative time and reference time)
   Value
- Existence of a traffic flow
- Session status
- Traffic property (a total communication volume, the number of packets, property of each traffic flow (user information, an access destination URL, or the like)

Further, the identification processing condition expresses timing for identification and can define one of the following items.
- Identification for every packet
- Identification in the beginning
- Identification by triggering
- Application of the same identification processing condition as that for a related packet
- According to the identification processing condition if there is any session

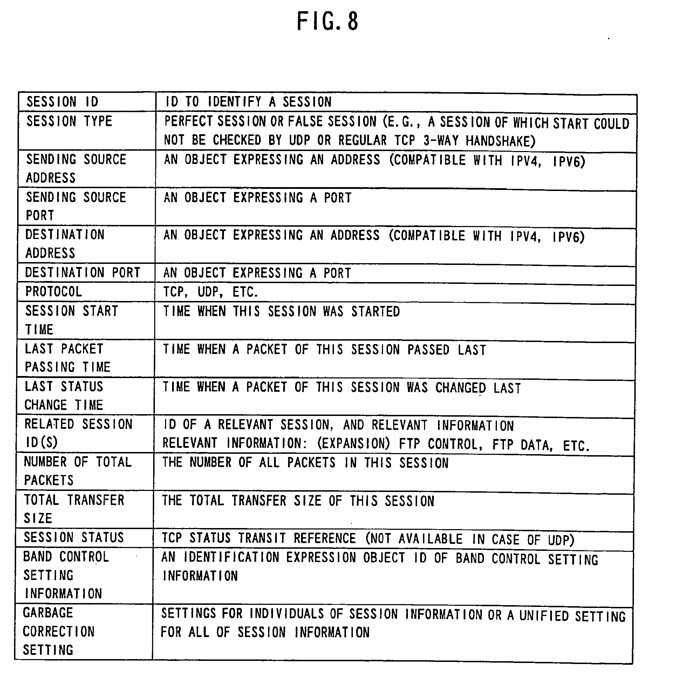

The session table 23 contains a table maintaining session information. FIG. 8 is a table showing an example of configuration of a session table according to the present embodiment. Also, the session table 23 has a garbage correction function to delete automatically unnecessary session information. The garbage correction function works in asynchronism with operation of band control, and periodically scans session information in the session table 23. The garbage correction function discards session information of a closed session. A closed session means a session through which no packet passes for a particular time period or a session which spends a particular time period in a CLOSE_WAIT state.

The band control determination section 21 instructs the band control execution section 13 about band control, based on packet information obtained from the received packet analysis section 12, band control setting information obtained from the band control setting information storage section 22, and session information obtained from the session table 23. Also, the band control determination section 21 stores determined instructions about band control, into the session table 23. The band control execution section 13 receives, from the band control determination section 21, an instruction as to how to deal with a corresponding packet. The band control execution section 13 performs band control in accordance with this instruction.

Described next will be operation of the band control device according to the present embodiment.

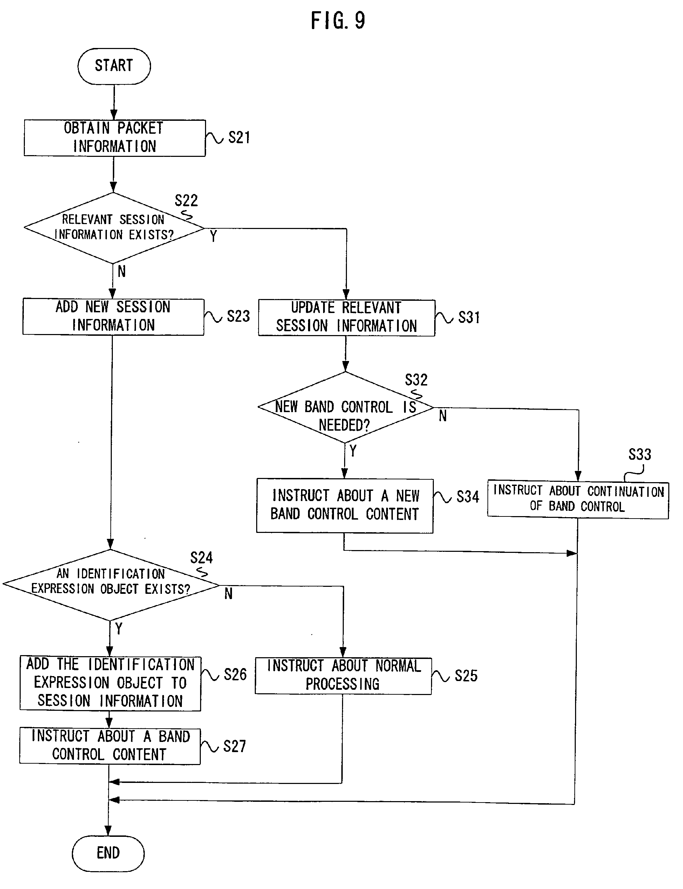

FIG. 9 is a flowchart showing an example of operation of the band control determination section 21 according to the present embodiment. A packet arrives at the packet buffer 11. Then, the received packet analysis section 12 analyzes the arrival packet, and sends information obtained from the packet, as packet information, to the band control determination section 21.

Now, the band control determination section 21 firstly obtains packet information from the received packet analysis section 12 (S21). The band control determination section 21 searches the session table 23 for related session information as session information relevant to the packet information, and determines whether relevant session information exists or not (S22). If relevant session information exists (S22, Y), the processing goes to a processing step S31. Otherwise, if no relevant session information exists (S22, N), the band control determination section 21 creates new session information and adds this information to the session table 23 (S23).

Next, the band control determination section 21 searches an identification table of traffic identification information of band control setting information stored in advance in the band control setting information storage section 22, for an identification expression object which the packet information satisfies, and determines whether such an identification expression object exists or not (S24). If such an identification expression object does not exist (S24, N), the band control determination section 21 instructs the band control execution section 13 to perform normal processing on the packet (S25), and this flow is terminated. Otherwise, if such an identification expression object exists (S24, Y), the band control determination section 21 stores the identification expression object ID into corresponding session information (S26), and instructs the band control execution section 13 about contents of band control corresponding to the identification expression object (S27). Then, this flow is terminated.

In the processing S31, the band control determination section 21 updates the relevant session information (S31). In the relevant session information, the status, final passage time, the total number of packets, and total transfer size are updated. Next, the band control determination section 21 verifies band control setting information obtained in the processing step S22, and determines whether new band control is needed or not (S32). If new band control is not needed (S32, N), the band control determination section 21 instructs the band control execution section 13 to continue processing as has been performed up to now (S33), and this flow is terminated. Otherwise, if new band control is needed (S32, Y), the band control determination section 21 instructs the band control execution section 13 to perform new processing according to a band condition contained in the band control setting information (S34). This flow is then terminated.

Next, several specific examples of traffic identification information will be described.

At first, a specific example of first traffic identification information will be described.

The following two identification condition objects are defined by the first traffic identification information.
- Identification condition object ID = A
- Identification conditions
   Sending IP address = ANY
   Sending port = ANY
   Receiving IP address = 10.25.175.100
   Receiving port = 80
- Identification condition object ID = B
- Identification conditions
   Sending IP address = ANY
   Sending port = ANY
   Receiving IP address = 10.25.175.100
   Receiving port = 8888

Also, the following identification expression object is defined.
- Logical expression
   A OR B

According to this kind of traffic identification information, a traffic flow is identified by the sending IP address, sending port, receiving IP address, and receiving port. Simultaneously, plural traffic flows are defined, linked to each other by a logical expression. As a result, plural traffic flows can be identified as one band control target.

In this example, an OR operation is used as a logical expression with respect to two identification conditions. Another operation may be effected on two identification conditions, or a NOT operation may be effected on one identification condition.

Described next will be a specific example of second traffic identification information.

In the second traffic identification information, the following two identification condition objects are defined.
- Identification condition object ID = A
- Identification conditions
   Sending IP address = ANY
   Sending port = ANY
   Receiving IP address = 10.25.175.100
   Receiving port = 80
- Identification condition object ID = T
- Identification conditions
   Time content = current time
   Time structure = time range
   Time type = absolute time (UTC)
   Start time = 2005/10/01 10:00
   End time = 2005/10/01 18:00

The following identification expression object is defined.
- Logical expression
   A AND T

According to the traffic identification information as described above, a traffic flow and existence time thereof are defined, linked to each other by a logical expression. In this manner, time conditions can be specified in identification of a band control target.

Described next will be a specific example of third traffic identification information.

The following four identification condition objects are defined by the third traffic identification information.
- identification condition object ID = A
- identification conditions
   Sending IP address = ANY
   Sending Port = ANY
   Receiving IP address = 10.25.175.100
   Receiving port = 80
- identification condition object ID = T1
- Identification conditions
   Time content = session occurrence time
   Time structure = single time
   Time type = absolute time (UTC)
- identification condition object ID = T2
- identification conditions
   Time content = current time
   Time structure = single time
   Time type = absolute time (UTC)
- identification condition object ID = T2
- identification conditions
   Time content = time length
   Time structure = single time
   Time type = relative time
   Value = 60 seconds

Also, the following identification expression object is defined.
- Logical expression
   A AND ((T2 - T1) < T3)

That is, this traffic identification information is to identify a traffic flow within 60 seconds from occurrence of a session. According to this traffic identification information, a traffic flow and communication status thereof (session status) are defined, linked to each other by a logical expression. In this manner, communication status can be specified in identification of a band control target.

Described next will be a specific example of fourth traffic identification information.

The following two identification condition objects are defined by the fourth traffic identification information.
- Identification condition object ID = A
- Identification conditions
   Sending IP address = ANY
   Sending port = ANY
   Receiving IP address = 10.25.175.100
   Receiving port = 80
- Identification condition object ID = I
- Identification conditions
   Access destination URL =
   "http://www.fujitsu.com/"

The following identification expression object is defined.
- Logical expression
   A AND I

According to the traffic identification information as described above, a traffic flow and a communication content thereof are defined, linked to each other by a logical expression. In this manner, the communication content can be specified in identification of a band control target.

Described next will be a specific example of fifth traffic identification information.

The following five identification condition objects are defined by the fifth traffic identification information.
- Identification condition object ID = A
- Identification conditions
   Sending IP address = ANY
   Sending Port = ANY
   Receiving IP address = 10.25.175.100
   Receiving port = 80
- Identification condition object ID = I
- Identification conditions
   Access destination URL =
   "http://www.fujitsu.com/"
- Identification condition object ID = T1
- Identification conditions
   Time content = session occurrence time
   Time structure = single time
   Time type = absolute time (UTC)
- identification condition object ID = T2
- Identification conditions
   Time content = current time
   Time structure = single time
   Time type = absolute time (UTC)
- Identification condition object ID = T2
- identification conditions
   Time content = time length
   Time structure = single time
   Time type = relative time
   Value = 60 seconds

Also, the following identification expression object is defined.
- Logical expression
   A AND (I AND ((T2 - T1) < T3))

That is, this traffic identification information is to identify a traffic flow which accesses a particular URL within 60 seconds from occurrence of a session. According to this traffic identification information, a traffic flow and communication status thereof are defined, linked to each other by a logical expression. In this manner, communication status and a communication content can be specified in identification of a band control target.

Described next will be a specific example of sixth traffic identification information.

The following five identification condition objects are defined by the sixth traffic identification information.
- Identification condition object ID = A
- identification conditions
   Sending IP address = ANY
   Sending Port = ANY
   Receiving IP address = 10.25.175.100
   Receiving port = 80
- Identification condition object ID = T1
- Identification conditions
   Time content = session occurrence time
   Time structure = single time
   Time type = absolute time (UTC)
- Identification condition object ID = T2
- Identification conditions
   Time content = current time
   Time structure = single time
   Time type = absolute time (UTC)
- Identification condition object ID = T2
- Identification conditions
   Time content = time length
   Time structure = single time
   Time type = relative time
   Value = 60 seconds
- identification condition object ID = D
- Identification processing condition =
   identification for every packet

Also, the following two identification expression objects are defined.
- Identification expression object ID = 100
- Logical expression
   A AND ((T2-T1)<T3)::
   identification processing condition D
- Identification expression object ID = 200
- Logical expression
   A AND ((T2 - T1) >= T3)::
   identification processing condition D

That is, in this traffic identification information, the identification expression objects (classes) switch from one to another at the boundary of 60 seconds from occurrence of a session. In addition, band control contents are defined corresponding to identification expression objects. Therefore, the band control contents switch as well. According to this traffic identification information, a traffic flow and communication status thereof are defined, linked to each other by a logical expression, and identification processing conditions are defined. Further, logical expressions are defined to be switched depending on the communication status. In this manner, depending on the communication status, different band control targets can be identified, and the band control contents can be switched.

In the above description, identification conditions and logical expressions are set with respect to traffic, time conditions, communication status (session status), and communication contents. However, identification conditions and logical expressions may be set or used in combination with each other, with respect to other information obtained from a packet.

The band control device according to the present embodiment can be easily applied to a network relay device, so that performance of the network relay device can be improved more. The network relay device may be a bridge, router, proxy server, or the like.

Further, a program by which a computer constituting a band control device is let execute the processing steps described above may be provided as a band control program. The program mentioned may be stored in recording media readable by computers. Then, the computer constituting a band control device can execute the program. The recording media readable by computers may include an internal storage device equipped in a computer, such as a ROM or RAM, a portable recording medium such as a CD-ROM, flexible disk, DVD disk, magneto-optical disk, or IC card, a database storing a computer program, another computer and a database thereof, and transfer media on lines.

Determination conditions correspond to identification condition objects in the embodiment. Determination expressions correspond to identification expression objects in the embodiment. A packet information obtaining section and a packet information obtaining step correspond to the received packet analysis section in the embodiment. A band control determination section and a band control determination step correspond to the band control determination section in the embodiment.

## Claims

1. A band control program which makes a computer of a band control device execute band control of traffic between networks, the program comprising:
a packet information obtaining step that obtains packet information as information concerning a packet which has arrived at the band control device; and
a band control determination step that makes determination as to the packet information obtained by the packet information obtaining step, based on a determination condition preset to make determination as to the packet information and a determination expression preset to execute calculation by use of the determination condition and performs a band control content preset according to the determination expression which the packet information satisfies, with respect to traffic to which the packet information belongs.

2. The band control program according to claim 1, wherein the determination expression is to perform logical calculation by use of the determination condition or another determination expression.

3. The band control program according to claim 1, wherein the band control determination step manages information concerning a traffic flow, and switches band control contents in correspondence with determination expressions if a determination expression which the packet information related to the traffic flow satisfies is switched to another determination expression.

4. The band control program according to claim 1, wherein the determination condition includes timing to make determination.

5. The band control program according to claim 1, wherein the packet information and the determination condition each include a sending source address, a sending destination (source?) port, a sending destination address, and a sending destination port.

6. The band control program according to claim 1, wherein the packet information includes time, and the determination condition includes time or a time range.

7. The band control program according to claim 1, wherein the packet information and the determination condition each include a communication content.

8. The band control program according to claim 1, wherein the determination condition includes session status.

9. A band control device which executes band control of traffic between networks, comprising:
a packet information obtaining section that obtains packet information as information concerning a packet which has arrived at the band control device; and
a band control determination section that makes determination as to the packet information obtained by the packet information obtaining section, based on a determination condition preset to make determination as to the packet information and a determination expression preset to execute calculation by use of the determination condition and performs a band control content preset according to the determination expression which the packet information satisfies, with respect to traffic to which the packet information belongs.

10. The band control device according to claim 9, wherein the determination expression is to perform logical calculation by use of the determination condition or another determination expression.

11. The band control device according to claim 9, wherein the band control determination section manages information concerning a traffic flow, and switches band control contents in correspondence with determination expressions if a determination expression which the packet information related to the traffic flow satisfies is switched to another determination expression.

12. The band control device according to claim 9, wherein the determination condition includes timing to make determination.

13. The band control device according to claim 9, wherein the packet information and the determination condition each include a sending source address, a sending destination (source?) port, a sending destination address, and a sending destination port.

14. The band control device according to claim 9, wherein the packet information includes time, and the determination condition includes time or a time range.

15. The band control device according to claim 9, wherein the packet information and the determination condition each include a communication content.

16. The band control device according to claim 9, wherein the determination condition includes session status.

17. A band control method for executing band control of traffic between networks, comprising:
a packet information obtaining step that obtains packet information as information concerning a packet which has arrived at the band control device; and
a band control determination step that makes determination as to the packet information obtained by the packet information obtaining step, based on a determination condition preset to make determination as to the packet information and a determination expression preset to execute calculation by use of the determination condition and performs a band control content preset according to the determination expression which the packet information satisfies, with respect to traffic to which the packet information belongs.

18. The band control method according to claim 17, wherein the determination expression is to perform logical calculation by use of the determination condition or another determination expression.

19. The band control method according to claim 17, wherein the band control determination step manages information concerning a traffic flow, and switches band control contents in correspondence with determination expressions if a determination expression which the packet information related to the traffic flow satisfies is switched to another determination expression.

20. The band control method according to claim 17, wherein the determination condition includes timing to make determination.

## Amended claims

### Amended claims in accordance with Rule 86(2) EPC.

**1.** A band control program which makes a computer of a band control device execute band control of traffic between networks, the program comprising:
a packet information obtaining step that obtains packet information as information concerning a packet which has arrived at the band control device; and
a band control determination step that makes determination as to the packet information obtained by the packet information obtaining step, based on an identification condition preset to make determination as to the packet information and an identification expression preset to execute calculation by use of the identification condition and performs a band control content preset according to the identification expression which the packet information satisfies, with respect to traffic to which the packet information belongs.

**2.** The band control program according to claim 1, wherein the identification expression is to perform logical calculation by use of the identification condition or another identification expression.

**3.** The band control program according to claim 1, wherein the band control determination step manages information concerning a traffic flow, and switches band control contents in correspondence with identification expressions if an identification expression which the packet information related to the traffic flow satisfies is switched to another identification expression.

**4.** The band control program according to claim 1, wherein the identification condition includes timing to make determination.

**5.** The band control program according to claim 1, wherein the packet information and the identification condition each include a sending source address, a sending destination (source?) port, a sending destination address, and a sending destination port.

**6.** The band control program according to claim 1, wherein the packet information includes time, and the identification condition includes time or a time range.

**7.** The band control program according to claim 1, wherein the packet information and the identification condition each include a communication content.

**8.** The band control program according to claim 1, wherein the identification condition includes session status.

**9.** A band control device for executing band control of traffic between networks, comprising:
a packet information obtaining section (12) configured to obtain packet information as information concerning a packet which has arrived at the band control device; and
a band control determination section (21) configured to make a determination as to the packet information obtained by the packet information obtaining section, based on an identification condition preset to make determination as to the packet information and an identification expression preset to execute calculation by use of the identification condition and configured to perform a band control content preset according to the identification expression which the packet information satisfies, with respect to traffic to which the packet information belongs.

**10.** The band control device according to claim 9, wherein the identification expression is configured to perform logical calculation by use of the identification condition or another identification expression.

**11.** The band control device according to claim 9, wherein the band control determination section is configured to manage information concerning a traffic flow, and switches band control contents in correspondence with identification expressions if an identification expression which the packet information related to the traffic flow satisfies is switched to another identification expression.

**12.** The band control device according to claim 9, wherein the identification condition includes timing to make determination.

**13.** The band control device according to claim 9, wherein the packet information and the identification condition each include a sending source address, a sending destination (source?) port, a sending destination address, and a sending destination port.

**14.** The band control device according to claim 9, wherein the packet information includes time, and the identification condition includes time or a time range.

**15.** The band control device according to claim 9, wherein the packet information and the identification condition each include a communication content.

**16.** The band control device according to claim 9, wherein the identification condition includes session status.

**17.** A band control method for executing band control of traffic between networks, comprising:
a packet information obtaining step that obtains packet information as information concerning a packet which has arrived at the band control device; and
a band control determination step that makes determination as to the packet information obtained by the packet information obtaining step, based on an identification condition preset to make determination as to the packet information and an identification expression preset to execute calculation by use of the identification condition and performs a band control content preset according to the identification expression which the packet information satisfies, with respect to traffic to which the packet information belongs.

**18.** The band control method according to claim 17, wherein the identification expression is to perform logical calculation by use of the identification condition or another identification expression.

**19.** The band control method according to claim 17, wherein the band control determination step manages information concerning a traffic flow, and switches band control contents in correspondence with identification expressions if an identification expression which the packet information related to the traffic flow satisfies is switched to another identification expression.

**20.** The band control method according to claim 17, wherein the identification condition includes timing to make determination.
